# EUROPÄISCHE PATENTSCHRIFT

(11) **EP 4 496 949 B1**
(45) Veröffentlichungstag und Bekanntmachung des Hinweises auf die Patenterteilung: **06.05.2026**
(21) Anmeldenummer: 23710219.9
(22) Anmeldetag: 02.03.2023
(51) Int. Cl.: F16D 1/08, F16B 3/00

(54) **PASSFEDER FÜR WELLE-NABE-VERBINDUNG UND WELLE-NABE-VERBINDUNG**
KEY FOR SHAFT-HUB CONNECTION AND SHAFT-HUB CONNECTION
CLAVETTE POUR LIAISON ARBRE-MOYEU ET LIAISON ARBRE-MOYEU

(30) Priorität: 23.03.2022 DE 102022001008
(43) Veröffentlichungstag der Anmeldung: 29.01.2025
(73) Patentinhaber: SEW-EURODRIVE GmbH & Co. KG, 76646 Bruchsal (DE)
(72) Erfinder: RANTA, Henri, 03600 Karkkila (FI)
(86) Internationale Anmeldenummer: PCT/EP2023/025098
(87) Internationale Veröffentlichungsnummer: WO 2023/179906

(56) Entgegenhaltungen:
- DE-A1- 102007 058 916
- DE-C- 609 436
- US-A- 1 397 530
- US-A- 1 439 770
- US-A- 4 615 639

## Beschreibung

Die Erfindung betrifft eine Passfeder für Welle-Nabe-Verbindung, insbesondere Passfederverbindung, und Welle-Nabe-Verbindung, insbesondere Passfederverbindung.

Es ist allgemein bekannt, dass eine Passfeder ein quaderförmiges Aussehen aufweist.

Aus der DE 10 2014 21 413 B3 ist eine Werkzeugaufnahme mit Kühlmittelauslass in Innenecke bekannt.

Aus der DE 609 436 A ist eine Keilverbindung bekannt.

Aus der DE 10 2006 052 529 A1 ist eine Vorrichtung zur Feststellung einer Überlastung einer Welle-Nabe-Verbindung bekannt.

**Aus der** US 4 615 639 A **ist als nächstliegender Stand der Technik eine Passfeder bekannt.**

**Aus der** US 1 439 770 A **ist eine selbstanpassende Passfederverbindung bekannt.**

**Aus der** US 1 397 530 A **ist ebenfalls eine Passfederverbindung bekannt.**

**Aus der** DE 609 436 C **ist eine Keilverbindung bekannt.**

**Aus der** DE 10 2007 058 916 A1 **ust ein Getriebe bekannt.**

Der Erfindung liegt daher die Aufgabe zugrunde, eine Welle-Nabe-Verbindung weiterzubilden, wobei sehr hohe Drehmomente auf möglichst kleinem Bauvolumen sicher übertragen werden sollen.

Erfindungsgemäß wird die Aufgabe bei der Passfeder nach den in Anspruch 1 angegebenen Merkmalen gelöst.

Wichtige Merkmale der Erfindung bei der Passfeder für Welle-Nabe-Verbindung, insbesondere Passfederverbindung, sind, dass
an einem ersten Endbereich der Passfeder die Passfeder zwei voneinander beabstandete Hornbereiche aufweist,
wobei die beiden Hornbereiche zueinander spiegelsymmetrisch ausgebildet sind,
insbesondere wobei die Passfeder mit den Hornbereichen einstückig, insbesondere einteilig, ausgebildet ist, insbesondere als Gussteil,
insbesondere wobei die Hornbereiche parallel zur Richtung der längsten Ausdehnung der Passfeder an der Passfeder hervorragen,
insbesondere wobei die Passfeder zwischen den beiden Hornbereichen einen Oberflächenbereich aufweist, welcher als Teilbereich einer Zylindermantelfläche ausgebildet ist,
insbesondere wobei der Oberflächenbereich die beiden Hornbereiche verbindet.

Von Vorteil ist dabei, dass die Passfeder ein hohes Drehmoment beziehungsweise hohe Kräfte sicher durchleitet. Insbesondere ist die Brechsicherheit, also die Sicherheit gegen Versagen der Passfeder, erhöht. Die Belastung, also die Krafteinleitung, erfolgt dabei vorzugsweise an derjenigen Seite, insbesondere ebenen Seitenfläche, der Passfeder, deren Normalenrichtung parallel zur eingeleiteten Kraft ausgerichtet ist und senkrecht zur Zylinderachse. Somit wird die Kraft in die längste ungestörte Seitenfläche der vorzugsweise im Wesentlichen quaderförmigen Passfeder eingeleitet. Der durch die Hornbereiche mit verdünnter Wandstärke ausgeführte Bereich der Passfeder weist eine etwas größere Elastizität auf und verhindert somit die Bruchwahrscheinlichkeit.

Wichtige Merkmale bei der Passfeder sind dabei, dass an einem ersten Endbereich der Passfeder die Passfeder eine zylinderförmige Ausnehmung aufweist,
wobei die Zylinderachse der zylinderförmigen Ausnehmung in einer Symmetrieebene der Passfeder enthalten ist.

Von Vorteil ist dabei, dass die Passfeder ein hohes Drehmoment beziehungsweise hohe Kräfte sicher durchleitet. Insbesondere ist die Brechsicherheit, also die Sicherheit gegen Versagen der Passfeder, erhöht. Die Belastung, also die Krafteinleitung, erfolgt dabei vorzugsweise an derjenigen Seite, insbesondere ebenen Seitenfläche, der Passfeder, deren Normalenrichtung parallel zur eingeleiteten Kraft ausgerichtet ist und senkrecht zur Zylinderachse. Somit wird die Kraft in die längste ungestörte Seitenfläche der quaderförmigen Passfeder eingeleitet. Der durch die Ausnehmung mit verdünnter Wandstärke ausgeführte Bereich der Passfeder weist eine etwas größere Elastizität auf und verhindert somit die Bruchwahrscheinlichkeit.

Bei einer vorteilhaften Ausgestaltung weist die Passfeder eine quaderförmige Grundstruktur auf und/oder ist im Wesentlichen quaderförmig ausgebildet, wobei an einem ersten Endbereich der insbesondere quaderförmigen Passfeder die Passfeder die zylinderförmige Ausnehmung aufweist. Von Vorteil ist dabei, dass die Passfeder durch eine einfach ausführbare spanende Nachbearbeitung mit der zylindrischen Ausnehmung versehbar ist und somit höher belastbar ist.

Bei einer vorteilhaften Ausgestaltung ist die zylinderförmige Ausnehmung an einem ersten schmalen Endbereich der Passfeder angeordnet. Von Vorteil ist dabei, dass nur wenig Material ausgenommen werden muss, da der Zylinder nicht vollständig, sondern nur teilweise in den Quader eingeschoben ist.

Bei einer vorteilhaften Ausgestaltung weist die Passfeder in Normalenrichtung zur Symmetrieebene die Breite B auf,
wobei der Radius R der zylinderförmigen Ausnehmung dem Produkt aus der Breite B der Passfeder und einem Wert zwischen 0,4 und 0,45 gleicht. Von Vorteil ist dabei, dass bei diesen Werten eine besonders hohe Sicherheit gegen Brechen erreichbar ist.

Bei einer vorteilhaften Ausgestaltung ist der Abstand T, insbesondere die kleinste Entfernung T, von dem die zylinderförmige Ausnehmung berandenden Oberflächenbereich der Passfeder zu jeder Seite der quaderförmigen Passfeder, welche eine zur Zylinderachse senkrecht ausgerichtete Normalenrichtung aufweist, stets gleich groß,
Insbesondere wobei die Seiten jeweils als ebene Flächen ausgebildet sind und die Normalenrichtung sich auf eine jeweilige die jeweilige ebene Fläche enthaltende Ebene bezieht,
insbesondere wobei beide Abstände T also betragsgleich sind,
wobei die maximale Tiefe S der zylindrischen Ausnehmung in der Passfeder dem Produkt aus dem Radius R und einem Wert zwischen 0,598 und 0,636 gleicht. Von Vorteil ist dabei, dass bei diesen Werten eine besonders hohe Sicherheit gegen Brechen erreichbar ist.

Bei einer vorteilhaften Ausgestaltung sind die Symmetrieebenen jeweils als Spiegelebenen ausgeführt oder fungieren als solche. Von Vorteil ist dabei, dass eine einfache Herstellung ermöglicht ist.

Bei einer vorteilhaften Ausgestaltung weist am zum ersten Endbereich der Passfeder entgegengesetzten Endbereich der Passfeder die Passfeder eine weitere zylinderförmige Ausnehmung auf,
deren Zylinderachse ebenfalls in der Symmetrieebene der Passfeder enthalten ist,
insbesondere
   - wobei die Ausnehmung auch am anderen schmalen Ende der Passfeder als eine zylindrische Ausnehmung ausgebildet ist
   - und/oder wobei die Passfeder eine weitere Symmetrieebene aufweist, welche die beiden zylindrischen Ausnehmungen durch gedachte Spiegelung ineinander überführt.

Von Vorteil ist dabei, dass die Passfeder auch symmetrisch zwischen zwei Lagern der Welle anordenbar ist und symmetrisch zu der auf die Welle aufgesteckten Nabe, insbesondere Zahnrad, anordenbar ist.

Bei einer Welle-Nabe-Verbindung, insbesondere Passfederverbindung, nach Anspruch 8 weist die Welle eine Längsnut, insbesondere eine sich in axialer Richtung, insbesondere also in Richtung der Drehachse der Welle, erstreckende Längsnut, insbesondere Passfedernut, auf, in welcher die Passfeder teilweise aufgenommen ist,
wobei die Passfeder in eine Längsnut, insbesondere eine sich in axialer Richtung, insbesondere also in Richtung der Drehachse der Nabe erstreckende Längsnut, insbesondere Passfedernut, der Nabe hineinragt. Von Vorteil ist dabei, dass eine einfache Herstellung ermöglicht und ein hohes Drehmoment übertragbar ist.

Bei einer vorteilhaften Ausgestaltung ist die Nabe als Zahnrad ausgebildet. Von Vorteil ist dabei, dass ein Drehmoment vom Zahnrad über die Passfeder in die Nabe einleitbar ist.

Bei einer vorteilhaften Ausgestaltung ist die Welle über zumindest ein Wälzlager drehbar gelagert,
wobei die zylindrische Ausnehmung an demjenigen Endbereich der Passfeder ausgebildet ist, welcher auf der von dem zur Passfeder nächstbenachbarten Wälzlager abgewandten Seite der Passfeder angeordnet ist. Von Vorteil ist dabei, dass die Ausnehmung die Sicherheit gegen Versagen der Passfeder erhöht, da die Ausnehmung im Bereich der höchsten Belastung angeordnet ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

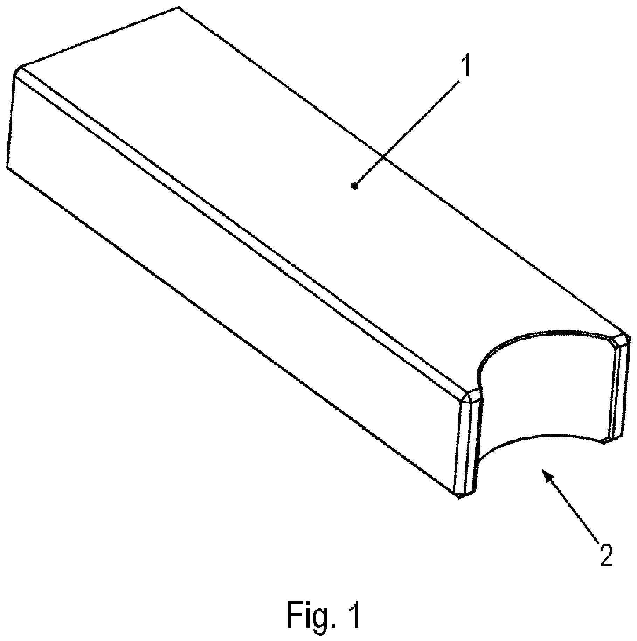

In der Figur 1 ist eine erfindungsgemäße Passfeder einer formschlüssigen Welle-Nabe-Verbindung in Schrägansicht dargestellt.

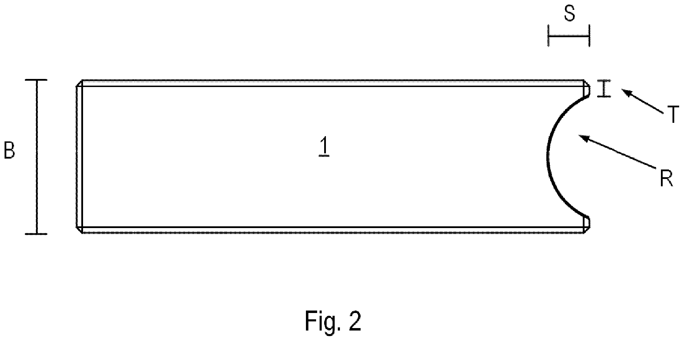

IN der Figur 2 ist eine zugehörige Draufsicht dargestellt.

Wie in den Figuren dargestellt, weist die erfindungsgemäße Passfeder eine quaderförmige Grundstruktur auf, wobei an ihrem ersten Endbereich, insbesondere an ihrem ersten schmalen Ende, eine zylinderförmige Ausnehmung 2 ausgebildet ist, insbesondere als Einschnitt.

Die zylinderförmige Ausnehmung 2 ist symmetrisch in der Passfeder 1 angeordnet. Die Zylinderachse ist in einer der Symmetrieebenen der quaderförmigen Passfeder 1 enthalten.

In Normalenrichtung dieser Symmetrieebene weist die Passfeder eine Breite B auf.

Der Radius R, insbesondere Zylinderradius, der zylinderförmigen Ausnehmung 2 ist kleiner als die Breite B. Vorzugsweise gleicht der Radius R dem Produkt aus der Breite B der Passfeder und einem Wert zwischen 0,4 und 0,45.

Der kleinste Abstand T des die zylinderförmige Ausnehmung berandenden Oberflächenbereichs zu jeder Seite der Passfeder 1, welche eine zur Zylinderachse senkrecht ausgerichtete Normalenrichtung aufweist, ist stets gleich groß. Beide Abstände T sind also betragsgleich.

Die Symmetrieebenen sind jeweils vorzugsweis als Spiegelebenen ausgeführt.

Die maximale Tiefe S der zylindrischen Ausnehmung in der Passfeder 1 gleicht dem Produkt aus dem Radius R und einem Wert zwischen 0,598 und 0,636.

Bei den genannten Werten weist die Passfeder eine ungewöhnlich hohe Brechsicherheit auf. Die Passfeder 1 ist somit zur Übertragung sehr hoher Kräfte beziehungsweise Drehmomente geeignet. Somit ist die erfindungsgemäße Passfederverbindung zur Übertragung hoher Drehmomente geeignet.

Wenn jedoch ein jeweiliger Wert außerhalb des obengenannten Intervalls verwendet wird, ist die Passfeder viel weniger belastbar und weist also eine viel geringere Brechsicherheit auf.

Die Passfeder ist einerseits teilweise in einer Längsnut, insbesondere Passfedernut, einer Welle aufgenommen und ragt in eine Längsnut, insbesondere Passfedernut einer Nabe, welche auf die Welle aufgesteckt ist.

Die Nabe ist beispielsweise als Hohlwelle oder Zahnrad ausgeführt.

Die Welle ist vorzugsweise über zumindest ein Wälzlager drehbar gelagert.

Besonders bevorzugt ist die zylindrische Ausnehmung an demjenigen Endbereich der Passfeder 1 ausgebildet, welcher auf der von dem zur Passfeder 1 nächstbenachbarten Wälzlager abgewandten Seite der Passfeder angeordnet ist.

Bei weiteren erfindungsgemäßen Ausführungsbeispielen wird auch am anderen schmalen Ende der Passfeder 1 eine zylindrische Ausnehmung 2 ausgebildet. Insbesondere weist dabei die Passfeder 1 eine Spiegelebene auf, welche die beiden zylindrischen Ausnehmung 2 durch gedachte Spiegelung ineinander überführt.

### Bezugszeichenliste

- 1: Passfeder
- 2: zylindrische Ausnehmung

- B: Breite der Passfeder
- R: Zylinderradius
- S: Tiefe der Ausnehmung 2 in der Passfeder 1
- T: Abstand

## Patentansprüche

1. Passfeder (1) für Welle-Nabe-Verbindung,
wobei an einem ersten Endbereich der Passfeder (1) die Passfeder (1) zwei voneinander beabstandete Hornbereiche aufweist,
wobei die beiden Hornbereiche zueinander spiegelsymmetrisch ausgebildet sind,
**dadurch gekennzeichnet, dass**
**an einem ersten Endbereich der Passfeder (1) die Passfeder (1) eine teilzylinderförmige Ausnehmung (2) aufweist,**
**wobei die Zylinderachse der teilzylinderförmigen Ausnehmung (2) in einer Symmetrieebene der Passfeder (1) enthalten ist,**
**wobei die maximale Entfernung zwischen der Zylinderachse und dem anderen Endbereich der Passfeder (1) größer ist als die größte, parallel zur Symmetrieebene gemessene Länge der Passfeder (1).**

2. Passfeder (1) nach Anspruch 1
**dadurch gekennzeichnet, dass**
die Passfeder (1) eine quaderförmige Grundstruktur aufweist und/oder quaderförmig,

3. Passfeder (1) nach einem der vorangegangenen Ansprüche,
**dadurch gekennzeichnet, dass**
die zylinderförmige oder teilzylinderförmige Ausnehmung (2) an einem ersten schmalen Endbereich der Passfeder (1) angeordnet ist.

4. Passfeder (1) nach einem der vorangegangenen Ansprüche,
**dadurch gekennzeichnet, dass**
die Passfeder (1) in Normalenrichtung zur Symmetrieebene die Breite B aufweist,
wobei der Radius R der zylinderförmigen oder teilzylinderförmigen Ausnehmung (2) dem Produkt aus der Breite B der Passfeder (1) und einem Wert zwischen 0,4 und 0,45 gleicht.

5. Passfeder (1) nach einem der vorangegangenen Ansprüche,
**dadurch gekennzeichnet, dass**
der Abstand T, von dem die zylinderförmige oder teilzylinderförmige Ausnehmung (2) berandenden Oberflächenbereich der Passfeder (1) zu jeder Seite der quaderförmigen Passfeder (1), welche eine zur Zylinderachse senkrecht ausgerichtete Normalenrichtung aufweist, stets gleich groß ist.

6. Passfeder (1) nach Anspruch 5,
**dadurch gekennzeichnet, dass**
die Seiten jeweils als ebene Flächen ausgebildet sind und die Normalenrichtung sich auf eine jeweilige die jeweilige ebene Fläche enthaltende Ebene bezieht.

7. Passfeder (1) nach einem Ansprüche 5 oder 6,
**dadurch gekennzeichnet, dass**
beide Abstände T also betragsgleich sind.

8. Passfeder (1) nach einem der Ansprüche 5 bis 7,
**dadurch gekennzeichnet, dass**
die maximale Tiefe S der zylindrischen Ausnehmung (2) in der Passfeder (1) dem Produkt aus dem Radius R und einem Wert zwischen 0,598 und 0,636 gleicht.

9. Passfeder (1) nach einem der vorangegangenen Ansprüche,
**dadurch gekennzeichnet, dass**
am zum ersten Endbereich der Passfeder (1) entgegengesetzten Endbereich der Passfeder (1) die Passfeder (1) eine weitere zylinderförmige oder teilzylinderförmige Ausnehmung (2) aufweist, deren Zylinderachse ebenfalls in der Symmetrieebene der Passfeder (1) enthalten ist.

10. Welle-Nabe-Verbindung, mit einer Passfeder (1) nach einem der vorangegangenen Ansprüche,
**dadurch gekennzeichnet, dass**
die Welle eine Längsnut, aufweist, in welcher die Passfeder (1) teilweise aufgenommen ist,
wobei die Passfeder (1) in eine Längsnut, der Nabe hineinragt.

11. Welle-Nabe-Verbindung nach einem der vorangegangenen Ansprüche, **dadurch gekennzeichnet, dass**
die Nabe als Zahnrad ausgebildet ist.

12. Welle-Nabe-Verbindung nach einem der vorangegangenen Ansprüche,
**dadurch gekennzeichnet, dass**
die Welle über zumindest ein Wälzlager drehbar gelagert,
wobei die zylindrische Ausnehmung (2) an demjenigen Endbereich der Passfeder (1) ausgebildet ist, welcher auf der von dem zur Passfeder (1) nächstbenachbarten Wälzlager abgewandten Seite der Passfeder (1) angeordnet ist.

## Claims

1. A feather key (1) for a shaft-hub connection,
wherein at a first end-region of the feather key (1), the feather key (1) has two horn regions spaced apart from one another,
wherein the two horn regions are mirror symmetrical to one another,
**characterised in that**
the feather key (1) has a part-cylindrical cutout (2) at a first end-region of the feather key (1),
wherein the cylinder axis of the part-cylindrical cutout (2) is contained in a plane of symmetry of the feather key (1),
wherein the maximum distance between the cylinder axis and the other end-region of the feather key (1) is greater than the greatest length, measured parallel to the plane of symmetry, of the feather key (1).

2. A feather key (1) according to claim 1,
**characterised in that**
the feather key (1) has a cuboid basic structure and/or is cuboid.

3. A feather key (1) according to any one of the preceding claims,
**characterised in that**
the cylindrical or part-cylindrical cutout (2) is arranged at a first narrow end-region of the feather key (1).

4. A feather key (1) according to any one of the preceding claims,
**characterised in that**
the feather key (1) has the width B in a normal direction to the plane of symmetry, wherein the radius R of the cylindrical or part-cylindrical cutout (2) is equal to the product of the width B of the feather key (1) and a value between 0.4 and 0.45.

5. A feather key (1) according to any one of the preceding claims,
**characterised in that**
the spacing T from the surface region, bounding the cylindrical or part-cylindrical cutout (2), of the feather key (1) is always the same in size at each side of the cuboid feather key (1), which has a normal direction oriented perpendicularly to the cylinder axis.

6. A feather key (1) according to claim 5,
**characterised in that**
the sides are each in the form of plane surfaces and the normal direction relates to a respective plane containing the respective plane surface.

7. A feather key (1) according to one of claims 5 and 6,
**characterised in that**
both spacings T are therefore the same in size.

8. A feather key (1) according to any one of claims 5 to 7,
**characterised in that**
the maximum depth S of the cylindrical cutout (2) in the feather key (1) is equal to the product of the radius R and a value between 0.598 and 0.636.

9. A feather key (1) according to any one of the preceding claims,
**characterised in that**
the feather key (1) has a further cylindrical or part-cylindrical cutout (2) at the end region, opposite the first end-region of the feather key (1), of the feather key (1), the cylinder axis of which cutout is likewise contained in the plane of symmetry of the feather key (1).

10. A shaft-hub connection with a feather key (1) according to any one of the preceding claims,
**characterised in that**
the shaft has a longitudinal groove in which the feather key (1) is partially received, wherein the feather key (1) projects into a longitudinal groove of the hub.

11. A shaft-hub connection according to any one of the preceding claims, **characterised in that**
the hub is in the form of a toothed wheel.

12. A shaft-hub connection according to any one of the preceding claims, **characterised in that**
the shaft is rotatably mounted via at least one rolling bearing,
wherein the cylindrical cutout (2) is formed at that end region of the feather key (1), which is arranged at that side of the feather key (1) remote from the rolling bearing next-adjacent to the feather key (1).

## Revendications

1. Clavette (1) pour liaison arbre-moyeu, la clavette (1) présentant au niveau d'une première région d'extrémité de la clavette (1) deux régions formant corne espacées l'une de l'autre,
les deux régions formant corne présentant une symétrie de miroir l'une par rapport à l'autre,
**caractérisée en ce que**
la clavette (1) présente un évidement (2) partiellement cylindrique au niveau d'une première région d'extrémité de la clavette (1),
l'axe cylindrique de l'évidement (2) cylindrique ou partiellement cylindrique étant contenu dans un plan de symétrie de la clavette (1),
la distance maximale entre l'axe de cylindre et l'autre région d'extrémité de la clavette (1) étant supérieure à la plus grande longueur de la clavette (1) mesurée parallèlement au plan de symétrie.

2. Clavette (1) selon la revendication 1,
**caractérisée en ce que**
la clavette (1) présente une structure de base de forme parallélépipédique et/ou est réalisée en forme de parallélépipède.

3. Clavette (1) selon l'une quelconque des revendications précédentes,
**caractérisée en ce que**
l'évidement (2) cylindrique ou partiellement cylindrique est agencé au niveau d'une première région d'extrémité étroite de la clavette (1).

4. Clavette (1) selon l'une quelconque des revendications précédentes, **caractérisée en ce que**
la clavette (1) présente une largeur B dans la direction normale par rapport au plan de symétrie, le rayon R de l'évidement (2) cylindrique ou partiellement cylindrique étant égal au produit de la largeur B de la clavette (1) et d'une valeur comprise entre 0,4 et 0,45.

5. Clavette (1) selon l'une quelconque des revendications précédentes, **caractérisée en ce que**
la distance T entre la région de surface, qui borde l'évidement (2) cylindrique ou partiellement cylindrique, de la clavette (1) et chaque côté, qui présente une direction normale perpendiculaire à l'axe de cylindre, de la clavette (1) parallélépipédique est toujours la même.

6. Clavette (1) selon la revendication 5,
**caractérisée en ce que**
les côtés sont respectivement réalisés sous la forme de surfaces planes et la direction normale se réfère à un plan respectif contenant la surface plane respective.

7. Clavette (1) selon l'une quelconque des revendications 5 ou 6,
**caractérisée en ce que**
les deux distances T sont donc d'un montant égal.

8. Clavette (1) selon l'une quelconque des revendications 5 à 7,
**caractérisée en ce que**
la profondeur maximale S de l'évidement (2) cylindrique dans la clavette (1) est égale au produit du rayon R et d'une valeur comprise entre 0,598 et 0,636.

9. Clavette (1) selon l'une quelconque des revendications précédentes, **caractérisée en ce que**
au niveau de la région d'extrémité de la clavette (1) opposée à la première région d'extrémité de la clavette (1), la clavette (1) présente un autre évidement (2) de forme cylindrique ou partiellement cylindrique,
dont l'axe de cylindre est également contenu dans le plan de symétrie de la clavette (1).

10. Connexion arbre-moyeu, comprenant une clavette (1) selon l'une quelconque des revendications précédentes,
**caractérisée en ce que**
l'arbre présente une rainure longitudinale dans laquelle la clavette (1) est partiellement accueillie, la clavette (1) pénétrant dans une rainure longitudinale du moyeu.

11. Connexion arbre-moyeu selon l'une quelconque des revendications précédentes, **caractérisée en ce que**
le moyeu est réalisé sous la forme d'une roue dentée.

12. Connexion arbre-moyeu selon l'une quelconque des revendications précédentes, **caractérisée en ce que**
l'arbre est mis sur palier de manière rotative par l'intermédiaire d'au moins un palier à roulement,
l'évidement (2) cylindrique étant formé au niveau de la région d'extrémité de la clavette (1) qui est agencée sur le côté de la clavette (1) qui est opposé au palier à roulement situé le plus proche de la clavette (1).
